(19) **Europäisches Patentamt European Patent Office Office européen des brevets**

(11) **EP 4 339 302 B1**

(12) **EUROPEAN PATENT SPECIFICATION**

(45) Date of publication and mention of the grant of the patent:
**10.12.2025 Bulletin 2025/50**

(21) Application number: **22828145.7**

(22) Date of filing: **26.05.2022**

(51) International Patent Classification (IPC):
*C21C 7/072* (2006.01)  *C21C 7/00* (2006.01)
*C21C 7/064* (2006.01)  *C21C 7/068* (2006.01)
*C21C 7/10* (2006.01)

(52) Cooperative Patent Classification (CPC):
**C21C 7/072; C21C 7/0075; C21C 7/064;
C21C 7/068; C21C 7/10;** Y02P 10/20

(86) International application number:
**PCT/JP2022/021634**

(87) International publication number:
**WO 2022/270226 (29.12.2022 Gazette 2022/52)**

(54) **METHOD FOR REFINING MOLTEN STEEL**

VERFAHREN ZUM RAFFINIEREN VON GESCHMOLZENEM STAHL

PROCÉDÉ D'AFFINAGE D'ACIER FONDU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.06.2021 JP 2021104031**

(43) Date of publication of application:
**20.03.2024 Bulletin 2024/12**

(73) Proprietor: **JFE Steel Corporation
Tokyo 100-0011 (JP)**

(72) Inventors:
• **HARADA, Akifumi
  Tokyo 100-0011 (JP)**
• **NAKAI, Yoshie
  Tokyo 100-0011 (JP)**

(74) Representative: **Haseltine Lake Kempner LLP
Bürkleinstrasse 10
80538 München (DE)**

(56) References cited:
CN-C- 100 535 153     JP-A- S61 149 415
US-B1- 6 391 081

**Description**

Technical Field

The present invention relates to a refining method for producing molten steel containing less impurity elements, such as oxygen, nitrogen, and sulfur, and more specifically to a molten steel refining method that includes exposing the surface of molten steel in a ladle to a hydrogen gas or an inert gas containing a hydrogen gas in the form of plasma gas to remove impurities using the plasma gas.

Background Art

Non-metallic inclusions in steel materials are generally known to adversely affect the properties and quality of the materials. Oxide non-metallic inclusions cause clogging of immersion nozzles in continuous casting to reduce productivity due to low casting speed and, in the worst case, interrupt casting. Non-metallic inclusions include oxide-based deoxidization products generated during deoxidization of molten steel, and sulfides and nitrides of alloying elements in steel. To reduce the amount of these non-metallic inclusions (hereinafter referred to simply as "inclusions"), it is important to reduce the amount of oxygen, nitrogen, and sulfur in molten steel as much as possible, and various efforts have been made in the related art.

For oxygen in molten steel, dissolved oxygen in molten steel is fixed in the form of $Al_2O_3$ and $SiO_2$ by adding deoxidizers, such as aluminum (Al) and silicon (Si). The generated oxide inclusions are removed by inclusion flotation by the gas stirring process for molten steel, the circulation process in an RH vacuum degasser, or other processes by way of a difference in specific gravity between the generated oxide inclusions and the molten steel. It is, however, impossible to separate and remove all oxide inclusions under present circumstances, and the oxide inclusions unavoidably remain in the molten steel.

For nitrogen in molten steel, the amount of nitrogen is reduced by vacuum processing in vacuum degassing equipment. However, nitrogen in molten steel is affected by surface active elements, such as oxygen and sulfur, and it is difficult to avoid nitrogen absorption due to entrainment of air from outside the vacuum system, so that a low nitrogen level is not stably achieved under present circumstances.

For sulfur in molten steel, the amount of sulfur is reduced by addition of CaO-based flux or $CaO\text{-}Al_2O_3$-based flux (addition of desulfurization agent). For example, ladle refining in a ladle furnace includes stirring molten steel by blowing argon gas into the molten steel from the ladle bottom to promote the reaction between the molten steel in the ladle and the $CaO\text{-}Al_2O_3$-based flux so that sulfur moves to the flux (slag) to reduce the amount of sulfur in the molten steel. However, such a treatment in the ladle furnace uses arc heating with graphite electrodes to cause dissolution of carbon in the molten steel. It is therefore difficult to apply such a treatment to ultra-low carbon steels or such steel grades.

There is a desulfurization technique in which CaO-based flux or $CaO\text{-}Al_2O_3$-based flux is added to molten steel circulating in a vacuum vessel in an RH vacuum degasser. There is also another desulfurization technique in which CaO-based flux or $CaO\text{-}Al_2O_3$-based flux is blasted (blown) onto molten steel circulating in a vacuum vessel from a top blowing lance using an inert gas, such as argon gas, as a carrier gas. In these methods, however, the reaction time between the molten steel and the flux is insufficient to produce molten steel with a low sulfur concentration efficiently.

The use of hydrogen plasma is known as a refining technique for reducing the amount of impurities in metal. Since the temperature inside plasma reaches thousands of degrees Celsius or higher, the hydrogen gas in the plasma gas is converted into atoms or ions in a very active state. The exposure of such very active hydrogen to the surface of molten steel is expected to provide a great refining effect that cannot be achieved by ordinary hydrogen gas exposure alone. More specifically, oxygen, nitrogen, and sulfur in molten steel can be readily removed by the reactions represented by formulas (6) to (8) below.

$$2H + [O] = H_2O \cdots\cdots \qquad (6)$$

$$xH + [N] = NH_x \cdots\cdots \qquad (7)$$

$$yH + [S] = H_yS \cdots\cdots \qquad (8)$$

wherein [O] represents oxygen in molten steel, [N] represents nitrogen in molten steel, and [S] represents sulfur in molten steel.

Oxygen, nitrogen, and sulfur in molten steel can be removed from the system as gases of $H_2O$, $NH_x$, and $H_yS$, respectively, and no inclusions are generated during removal of oxygen (i.e., during deoxidization), resulting in steel with high cleanliness.

Patent Literature 1 is a refining technique for producing high-purity metals using such hydrogen plasma. Patent Literature 1 discloses suitable ranges of the pressure in a furnace and the hydrogen concentration in plasma gas for reducing the amount of oxygen, nitrogen, or carbon in metals when the metals are melted by using hydrogen plasma. Patent Literature 2 and 3 further disclose a molten iron refining technique using hydrogen plasma.

Citation List

Patent Literature

Patent Literature 1: Japanese Patent No. 4305792
Patent Literature 2: CN 100 535 153 C
Patent Literature 3: US 6 391 081 B1

Summary of Invention

Technical Problem

However, the technique of Patent Literature 1 has the following issue when applied to the industrial-scale steelmaking process.

Examples in Patent Literature 1 describe the refining effect obtained when tens of grams to tens of kilograms of metal is treated in a plasma melting furnace. It is, however, necessary to treat more than 100 tons of molten steel in the industrial-scale steelmaking process, and it is difficult to expose the entire molten steel to plasma gas. The technique disclosed in Patent Literature 1 may thus fail to provide the effect of readily removing impurities. To obtain the effect of readily removing impurities, it is important to efficiently perform the hydrogen plasma treatment by appropriately controlling not only the plasma conditions but also the flow conditions of the molten steel.

In the technique disclosed in Patent Literature 1, the amount of metal to be exposed to hydrogen plasma or the relationship between the amount of metal and the plasma gas flow rate is not defined. Therefore, there may be a case where the plasma gas flow rate and the amount of hydrogen relative to the amount of metal are insufficient to obtain an adequate impurity reduction effect even if the composition of plasma gas and the pressure of an atmosphere are appropriately controlled. Furthermore, Patent Literature 1 is not a technique for applying hydrogen plasma to molten iron, but has a function of heating and melting a target meal with plasma. For this, the application of the plasma gas conditions disclosed for molten steel as in the steelmaking process may fail to provide the same expected effect.

The present invention has been made in light of the above circumstances, and an object of the present invention is to provide a molten steel refining method for efficiently producing high-purity molten steel with less impurities by accelerating refining reactions, such as deoxidization, denitrification, and desulfurization, upon application of hydrogen plasma to molten steel in a ladle in the steelmaking process.

Solution to Problem

The aspects of the present invention for solving the above problems are as described below.

[1] A molten steel refining method including:

a step of performing a gas stirring process for stirring molten steel in a ladle by blowing a stirring gas into the molten steel contained in the ladle,
wherein in the gas stirring process, a surface of the molten steel, which is in a flow state due to the gas stirring process, in the ladle is subjected to a plasma treatment in which the surface of the molten steel is exposed to a hydrogen gas or an inert gas containing a hydrogen gas in a form of plasma gas from a plasma generator above the molten steel in the ladle under conditions that satisfy formula (1) below, and the plasma treatment reduces an amount of one or two or more elements selected from oxygen, nitrogen, and sulfur contained in the molten steel,
[Math. 1]

$$\frac{G_P \times (H_2)}{Q} \geq 0.05 \quad \cdots (1)$$

wherein $G_P$ is a flow rate (Nm$^3$/min) of the plasma gas, ($H_2$) is a hydrogen gas concentration (vol%) in the plasma gas, and Q is a molten steel circulation flow rate (ton/min) of the molten steel in the ladle.

[2] The molten steel refining method according to [1], wherein the molten steel circulation flow rate of the molten steel in the ladle is calculated by using formulas (2), (3), and (4) below,

[Math. 2]

$$Q = W_m/t_C \quad \cdots (2)$$

$$t_C = 0.555 \times \left[ (D^2/H)^2/\varepsilon \right]^{0.337} \quad \cdots (3)$$

$$\varepsilon = \frac{6.18 \times G_B \times T_L}{W_m} \times \left[ \ln\left(1 + \frac{H}{1.95 \times 10^{-3} \times P_0}\right) + 0.06\left(1 + \frac{298}{T_L}\right) \right] \quad \cdots (4)$$

wherein Q is the molten steel circulation flow rate (ton/min) of the molten steel in the ladle, $W_m$ is a mass (ton) of the molten steel in the ladle, $t_c$ is a molten steel circulation time (min) of the molten steel in the ladle, D is an average diameter (m) of a molten steel bath in the ladle, H is a depth (m) of the molten steel bath in the ladle, $\varepsilon$ is a stirring power (W/ton), $G_B$ is a total stirring gas blowing flow rate (Nm$^3$/min) into the molten steel in the ladle, $T_L$ is a molten steel temperature (K) of the molten steel in the ladle, and $P_0$ is a pressure (torr) of an atmosphere in a plasma-exposed region.

[3] The molten steel refining method according to [1] or [2], wherein the gas stirring process is performed by blowing the stirring gas into the molten steel in the ladle through one or two or more gas blowing sections located at a bottom of the ladle, and a stirring power ($\varepsilon$) calculated from formula (4) in the gas stirring process is 25 W/ton or more.

[4] The molten steel refining method according to [3], wherein a region within a plasma-exposed range radius (r), which is calculated from formula (5) below, from a center of the region directly above the surface of the molten steel vertically above at least one of the gas blowing sections is exposed to the plasma gas:

[Math. 3]

$$r = 0.6 \times H \times (g_B^{0.3} - 0.025)^{0.5} \quad \cdots (5)$$

wherein r is the plasma-exposed range radius (m), and $g_B$ is a stirring gas blowing flow rate (Nm$^3$/min/gas blowing section).

[5] The molten steel refining method according to any one of [1] to [4], wherein the pressure of the atmosphere in exposing the molten steel in the ladle to the plasma gas is 150 torr or less.

[6] The molten steel refining method according to any one of [1] to [5], wherein a total concentration of iron oxide and manganese oxide in a slag floating on the surface of the molten steel contained in the ladle is 5 mass% or less.

[7] The molten steel refining method according to any one of [1] to [6], wherein the plasma treatment reduces amounts of three elements, oxygen, nitrogen, and sulfur, contained in the molten steel simultaneously.

Advantageous Effects of Invention

According to the present invention, molten steel contained in a ladle can be appropriately subjected to a hydrogen plasma treatment, and as a result, high-purity steel with less impurities can be produced readily, which provides industrially advantageous effects.

Brief Description of Drawings

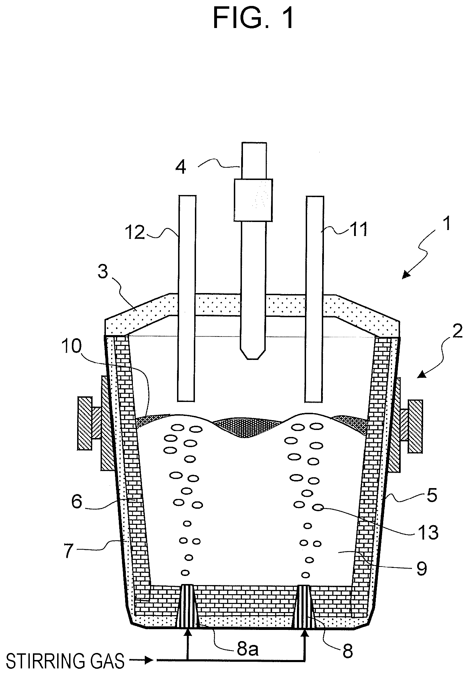

[Fig. 1] Fig. 1 is a schematic longitudinal sectional view of an example of a typical ladle furnace.

Description of Embodiments

The present invention will be described below in detail.

The molten steel refining method according to the present invention includes a step of performing a gas stirring process for stirring molten steel in a ladle by blowing a stirring gas into the molten steel contained in the ladle, wherein in the gas stirring process, the surface of the molten steel, which is in a flow state due to the gas stirring process, in the ladle is exposed to a hydrogen gas plasma or a gas mixture of a hydrogen gas plasma and an inert gas in the form of plasma gas from a plasma generator above the molten steel in the ladle, and the exposure of the surface of the molten steel to the plasma gas removes one or two or more elements selected from oxygen, nitrogen, and sulfur in the molten steel to reduce the amounts of the elements. In this description, the exposure of the surface of the molten steel to a hydrogen gas or an inert gas containing a hydrogen gas in the form of plasma gas is referred to as a "plasma treatment" or "hydrogen plasma treatment".

The refining equipment that enables implementation of the present invention is a secondary refining furnace in which molten steel can be stirred by blowing a stirring gas into molten steel in a ladle. Examples of the refining equipment include a ladle furnace (LF), a vacuum oxygen decarburization furnace (VOD furnace), a vacuum arc decarburization furnace (VAD furnace), and a revolutionary degassing activator (REDA) vacuum degasser.

Fig. 1 is a schematic longitudinal sectional view of an example of a typical ladle furnace. In Fig. 1, reference number 1 represents a ladle furnace, 2 represents a ladle, 3 represents a cover, 4 represents a graphite electrode, 5 represents an outer steel shell, 6 represents a lining refractory, 7 represents a permanent refractory, 8 and 8a each represent a bottom blowing plug, 9 represents molten steel, 10 represents a slag, 11 and 12 each represent a plasma torch, and 13 represents a stirring gas bubble. A ladle 2 containing a molten steel 9 has an outer steel shell 5 as an outer shell and has refractories including a permanent refractory 7 and a lining refractory 6 in this order inside the outer steel shell 5. At least part (mainly slag line) of the lining refractory 6 is composed of a MgO refractory. The bottom of the ladle 2 has, as gas blowing sections, bottom blowing plugs 8 and 8a through which a stirring gas, such as a noble gas, is blown. Plasma torches 11 and 12 are devices constituting part of the plasma generator. The surface of the molten steel 9 in the ladle is subjected to the hydrogen plasma treatment by being exposed to a plasma gas from end portions of the plasma torches 11 and 12. The plasma torches 11 and 12 penetrate a cover 3 and can vertically move in a space surrounded by the ladle 2 and the cover 3. In Fig. 1, the ladle refining furnace 1 has two plasma torches, but the number of plasma torches may be one, or three or more. In Fig. 1, the ladle refining furnace 1 has two bottom blowing plugs, but the number of bottom blowing plugs may be one, or three or more.

The ladle furnace 1 is equipment in which a refining flux and an alloy material are added to the molten steel 9 in the ladle while the molten steel 9 is stirred by blowing a stirring gas, such as argon gas, into the molten steel 9 through the bottom blowing plugs 8 and 8a. The ladle furnace 1 is also equipment in which the composition and temperature of the molten steel 9 are controlled at desired values by Joule heating with graphite electrodes 4. The equipment in which Joule heating is performed with an AC power supply has three graphite electrodes 4 in many cases. In Fig. 1, two of three graphite electrodes 4 are omitted, and one graphite electrode 4 is illustrated. In the ladle furnace 1, the added refining flux is melted to form a slag 10 having a desired composition, and the slag 10 reacts with the molten steel 9 to control the morphology of the inclusions in the molten steel and cause the desulfurization reaction of the molten steel. The reason why the lining refractory 6 at the slag line of the ladle 2 is a MgO refractory is that the MgO refractory has high corrosion resistance to the slag 10. In the ladle furnace 1, the pressure of the atmosphere in the space surrounded by the ladle 2 and the cover 3 is equal to the atmospheric pressure. In other words, refining cannot be performed under reduced pressure in the ladle furnace 1.

A VOD furnace (not shown) and a VAD furnace (not shown) have a vacuum chamber connected to an exhaust system, and dispose the ladle 2 containing the molten steel 9 inside the vacuum chamber. The pressure inside the vacuum chamber is then reduced, and a noble gas or non-oxidizing gas for stirring is blown through the bottom blowing plugs 8 and 8a located at the bottom of the ladle 2. With the molten steel 9 in the ladle stirred accordingly, a refining agent such as a desulfurization agent, together with an oxygen gas or a carrier gas, is blown into the molten steel 9 in the ladle from a top blowing lance located to penetrate the vacuum chamber. Like the ladle furnace 1, the VAD furnace has graphite electrodes for heating the molten steel 9. In the VOD furnace and the VAD furnace, refining is normally performed under reduced pressure. Plasma torches are placed in an upper part of the vacuum chamber so as to penetrate the vacuum chamber, whereby the present invention can be implemented.

A REDA vacuum degasser (not shown) is a degassing furnace in which bottom blowing stirring of the molten steel in the ladle using a stirring gas is combined with a large-diameter immersion vessel in which the inner pressure is reduced and that has an end portion immersed in the molten steel in the ladle. With bottom blowing stirring, the molten steel level is raised in the large-diameter immersion vessel, and the molten steel is refined in the REDA vacuum degasser. In the REDA vacuum degasser, refining is normally performed under reduced pressure. Plasma torches are placed in an upper part of the large-diameter immersion vessel so as to penetrate the large-diameter immersion vessel, whereby the present invention can be implemented.

In the molten steel refining method according to this embodiment, the surface of the molten steel 9 being stirred by a stirring gas, such as an argon gas, is exposed to a hydrogen gas or an inert gas containing a hydrogen gas in the form of plasma gas from the plasma torches 11 and 12 during refining of the molten steel 9 in a secondary refining furnace, such as the ladle furnace 1 or a VOD furnace. Since the temperature in the plasma reaches thousands of degrees Celsius or higher, the hydrogen gas in the plasma gas is converted into atoms or ions in a very active state. The exposure of the surface of the molten steel to active hydrogen in the form of atoms or ions can form the reactions represented by formulas (6), (7), and (8) below and can readily remove oxygen, nitrogen, and sulfur in the molten steel.

$$2H + [O] = H_2O \cdots\cdots \quad (6)$$

$$xH + [N] = NH_x \cdots\cdots \quad (7)$$

$$yH + [S] = H_yS \cdots\cdots \quad (8)$$

In formulas (6), (7), and (8), [O] represents oxygen in molten steel, [N] represents nitrogen in molten steel, and [S] represents sulfur in molten steel.

In Fig. 1, a stirring gas is blown through the bottom blowing plugs 8 and 8a. Alternatively, an injection lance (not shown) may be immersed in the molten steel 9, and a stirring gas may be blown into the molten steel 9 from an end portion of the injection lance. Examples of the stirring gas include argon, which is an inert gas, and a hydrogen gas and propane, which are reducing gases. When the denitrification reaction is not intended, the stirring gas may be nitrogen gas in the hydrogen plasma treatment. The stirring gas may be a mixture of an inert gas and nitrogen gas, or may be switched between an inert gas and nitrogen gas as needed during the hydrogen plasma treatment.

There are various methods for generating plasma. A typical method for generating plasma uses the plasma torches 11 and 12 as illustrated in Fig. 1. The plasma torches 11 and 12 are one of devices for generating plasma arcs stably and in a well-controlled manner in a form suitable for various applications by mainly using a direct current and by the action of, for example, gas flow and water-cooled nozzles.

The plasma torches using a DC power supply described above include non-transferred plasma torches and transferred plasma torches. Non-transferred plasma torches eliminate the need of electrodes on the molten steel side and have less equipment restrictions and inexpensive installation costs. From these points of view, non-transferred plasma torches using DC arc discharge are preferably used.

The plasma generator may be of any type as long as it can be placed above the molten steel 9 and can stably supply hydrogen plasma to the surface of the molten steel. For example, when the hydrogen plasma treatment is performed in the ladle furnace 1, a hydrogen gas or an inert gas containing a hydrogen gas may be converted into plasma by supplying the hydrogen gas or the inert gas containing hydrogen gas into arcs from the graphite electrodes 4. In the process with no electrodes for heating as in a VOD furnace, the hydrogen plasma treatment can be performed by supplying a hydrogen gas or an inert gas containing a hydrogen gas between electrodes for generating AC arcs located above the molten steel 9.

The plasma gas may be a hydrogen gas or a gas mixture of a hydrogen gas and an inert gas. The reason for using a hydrogen gas is that the impurities in the molten steel can be directly removed by using a hydrogen gas plasma, as described above. To obtain the effect of readily removing impurities, 0.5 vol% or more of hydrogen gas is preferably mixed in the plasma gas. Since the impurity removal effect increases with increasing hydrogen gas concentration in the hydrogen plasma gas, there is no upper limit of the hydrogen gas concentration in the hydrogen plasma gas. The inert gas may be an argon gas or a helium gas.

To readily reduce the amount of impurities, such as oxygen, nitrogen, and sulfur, in molten steel, the following three factors need to be controlled in suitable ranges: the flow rate of plasma gas, the hydrogen gas concentration in the plasma gas, and the molten steel circulation flow rate of the molten steel in the ladle.

More specifically, to obtain the effect of readily removing impurities, it is necessary to not only increase the hydrogen gas concentration in the plasma gas, but also supply an appropriate amount of hydrogen gas relative to the circulation flow rate of the molten steel circulating in the molten steel bath in the ladle by bottom-blowing gas stirring. More specifically, as shown in formula (1) below, the following three factors need to satisfy the relationship of formula (1) below: the flow rate ($G_P$) of plasma gas, the hydrogen concentration ($H_2$) in the plasma gas, and the molten steel circulation flow rate (Q) of the molten steel in the ladle. The relationship of three factors, ($G_P \times (H_2)/Q$), is preferably 0.1 or more, more preferably 0.5 or more. If ($G_P \times (H_2)/Q$) is more than 3.0, a large output is required for dissociation or ionization of hydrogen in the plasma gas. Furthermore, the plasma torches undergo noticeable wear with a large output. Therefore, ($G_P \times (H_2)/Q$) is more preferably 3.0 or less.

[Math. 4]

$$\frac{G_P \times (H_2)}{Q} \geq 0.05 \quad \cdots(1)$$

In formula (1), $G_P$ is a flow rate ($Nm^3/min$) of the plasma gas, ($H_2$) is a hydrogen gas concentration (vol%) in the plasma gas, and Q is a molten steel circulation flow rate (ton/min) of the molten steel in the ladle. The unit "Nm³/min" of the flow rate of the plasma gas represents the volumetric flow rate of the plasma gas, and "Nm³" means the volume of the plasma gas in the standard state. In this description, the plasma gas in the standard state has 1 atm (101325 Pa) at 0°C.

The molten steel circulation flow rate (Q) of the molten steel in the ladle is affected by the mass of the molten steel in the ladle and the stirring power of the bottom-blowing gas. The molten steel circulation flow rate (Q) of the molten steel 9 in the ladle can thus be obtained by measuring the molten steel circulation time of the molten steel in the ladle 2 in an actual plant for each condition and dividing the mass of the molten steel in the ladle by the measured molten steel circulation time.

When a tracer element (e.g., copper, nickel) is added to the molten steel 9 in the ladle, and the time required for variations in tracer element concentration in samples for composition analysis collected from the inside of the ladle over time to fall within ±5% is defined as a uniform mixing time, the molten steel circulation time is about 1/3 the uniform mixing time, and a third of the obtained uniform mixing time can be used as a molten steel circulation time.

It is well known that the molten steel circulation time of the molten steel in the ladle can be obtained by the empirical regression equation represent by formula (3) below, and that the stirring power ($\varepsilon$) in formula (3) below can be obtained by the empirical regression equation represented by formula (4) below. Therefore, the molten steel circulation flow rate (Q) of the molten steel in the ladle is preferably obtained by using formulas (2), (3), and (4) below.

[Math. 5]

$$Q = W_m / t_C \quad \cdots (2)$$

$$t_C = 0.555 \times \left[ (D^2/H)^2 / \varepsilon \right]^{0.337} \quad \cdots (3)$$

$$\varepsilon = \frac{6.18 \times G_B \times T_L}{W_m} \times \left[ \ln\left(1 + \frac{H}{1.95 \times 10^{-3} \times P_0}\right) + 0.06\left(1 + \frac{298}{T_L}\right) \right] \quad \cdots (4)$$

In formula (2) or (4), Q is the molten steel circulation flow rate (ton/min) of the molten steel in the ladle, $W_m$ is the mass (ton) of the molten steel in the ladle, $t_c$ is the molten steel circulation time (min) of the molten steel in the ladle, D is the average diameter (m) of the molten steel bath in the ladle, H is the depth (m) of the molten steel bath in the ladle, $\varepsilon$ is the stirring power (W/ton), $G_B$ is the total stirring gas blowing flow rate (Nm³/min) into the molten steel in the ladle, $T_L$ is the molten steel temperature (K) of the molten steel in the ladle, and $P_0$ is the pressure (torr) of an atmosphere in a plasma-exposed region. The unit "Nm³" of the total stirring gas blowing flow rate ($G_B$) into the molten steel in the ladle means the volume of the total stirring gas in the standard state, and the stirring gas in the standard state has 1 atm (101325 Pa) at 0°C. The "torr" is a pressure unit, and 1 torr corresponds to 133.32 Pa. The side wall of the ladle 2 may be inclined outward toward the top, and the average diameter of the molten steel bath in the ladle is therefore the average value of the diameter of the bottom part and the diameter of the top part of the molten steel bath in the ladle.

The molten steel 9 contained in the ladle before the hydrogen plasma treatment may be molten steel that has been tapped to the ladle 2 from a converter or an electric arc furnace and has been transferred to a gas stirring process for stirring the molten steel in the ladle by blowing a stirring gas, for example, after a vacuum degassing refining process in vacuum degassing equipment, such as an RH vacuum degasser.

The molten steel 9 before the hydrogen plasma treatment may be in a non-deoxidized state, or the molten steel 9 may be pre-deoxidized by supplying a reducing gas, such as a hydrogen gas or propane, to the molten steel 9 before the hydrogen plasma treatment. The pre-deoxidization with a reducing gas before the plasma treatment allows the plasma treatment to start when the oxygen concentration in the molten steel decreases to some extent, which reduces the load of the reaction represented by formula (6) above and shortens the time for the plasma treatment.

To focus on the removal of nitrogen and sulfur from the molten steel, the oxygen concentration in the molten steel may be reduced in advance by deoxidizing the molten steel 9 with addition of deoxidizers, such as aluminum and silicon, before the plasma treatment. In this case, the molten steel already has a low oxygen concentration, and the deoxidization effect of the plasma treatment is limited. The oxygen in the molten steel functions as a surfactant element, and a reduction in oxygen concentration in the molten steel by deoxidization may inhibit desorption of nitrogen gas, hydrogen nitride, and hydrogen sulfide from the molten steel surface to a gas phase (atmosphere in ladle). However, when the oxygen concentration in the molten steel is reduced in advance by the deoxidization treatment with aluminum and silicon, the effect of hydrogen plasma in rapidly removing oxygen, nitrogen, sulfur, and other elements in the molten steel can be obtained. In addition, the deoxidization of the molten steel 9 may not only provide the sulfur removal effect directly attributed to the hydrogen plasma treatment but also promote the desulfurization reaction caused by the molten steel-slag reaction.

The plasma output (E) more preferably satisfies formula (9) below. A certain or higher level of output is required for dissociation of hydrogen gas into atoms at a high rate, but the required output depends on the flow rate of the introduced plasma gas or the hydrogen concentration in the plasma gas. As a result of investigation, it is found that the plasma output preferably satisfies the relationship of formula (9) below. With increasing output, not only the dissociation of hydrogen gas into hydrogen atoms but also the rate of ionization of hydrogen gas into hydrogen ions increases, so that the impurity removal effect becomes more noticeable. With increasing output, however, the power cost increases. The plasma output is therefore selected on the basis of the balance between the required quality and the cost.

$$E \geq G_P \times \{1.5 \times (H_2) + 11.5) \quad \cdots \quad (9)$$

In formula (9), E is a plasma output (kW).

In the plasma treatment, impurities can be more efficiently reduced by applying a certain or higher level of flow to the molten steel 9 in the ladle. More specifically, a relatively local region of the molten steel surface is exposed to plasma, and new molten steel 9 is continuously fed to the plasma-exposed area by stirring the molten steel to readily reduce the impurity concentration in the entire molten steel in the ladle.

It has been found that the flow of the molten steel surface correlates with the stirring power ($\varepsilon$) represented by formula (4), and the flow of the molten steel surface increases with increasing stirring power ($\varepsilon$). Therefore, the stirring power ($\varepsilon$) is preferably 25 W/ton or higher to improve the efficiency of the plasma treatment. If the stirring power ($\varepsilon$) is lower than 25 W/ton, the molten steel surface, which is a plasma-exposed area, and the bulk molten steel circulate and mix slowly, so that the effect of readily reducing the amount of impurities is not obtained. There is no upper limit of the stirring power ($\varepsilon$), but the stirring power ($\varepsilon$) is preferably 150 W/ton or less because gas channeling or molten steel scattering increases at an excessively high stirring power ($\varepsilon$).

There is a suitable range for the position of plasma exposure. More specifically, the places at or near which the stirring gas blown in through the bottom blowing plugs 8 and 8a floats up to the molten steel surface in the form of stirring gas bubbles 13 are preferably exposed to hydrogen plasma. In Fig. 1, the plasma torch 11 is placed vertically above the bottom blowing plug 8, and the plasma torch 12 is placed vertically above the bottom blowing plug 8a. In other words, in the present invention, a region within the plasma-exposed range radius (r), which is calculated from formula (5) below, from a center of the region directly above the surface of the molten steel vertically above at least one of the gas blowing sections (bottom blowing plugs) is exposed to the plasma gas.

[Math. 6]

$$r = 0.6 \times H \times (g_B{}^{0.3} - 0.025)^{0.5} \quad \cdots (5)$$

In formula (5), r is the plasma-exposed range radius (m), and $g_B$ is a stirring gas blowing flow rate (Nm$^3$/min/gas blowing section). The unit "Nm$^3$" of the stirring gas blowing flow rate ($g_B$) means the volume of the stirring gas in the standard state, and the stirring gas in the standard state has 1 atm (101325 Pa) at 0°C.

The molten steel has the fast (violent) flow in a region with the plasma-exposed range radius (r) on the surface of the molten steel in the ladle, and the exposure of the region to plasma accelerates the reaction between hydrogen plasma and the molten steel in the ladle. In the region corresponding to the plasma-exposed range radius (r), the molten steel 9 raising together with the stirring gas bubbles 13 pushes the slag 10 away to expose the molten steel surface, or the slag has a relatively small thickness. In this region, the molten steel surface can thus be subjected to the plasma treatment without inhibition by the slag 10.

When a region other than the region with the plasma-exposed range radius (r) is exposed to plasma, the plasma may not reach the molten steel 9 in that region because slow molten steel flow causes deposition of the pushed-away slag 10 to increase the slag thickness.

The atmosphere in which the surface of the molten steel in the ladle is exposed to plasma preferably has reduced pressure, specifically 150 torr or lower. The exposure of the surface of the molten steel to a plasma gas under reduced pressure of 150 torr or lower may increase the flow velocity of plasma jet and even promote dissociation of hydrogen gas molecules into atoms or ions, resulting in a greater effect of reducing impurities in the molten steel than that in the plasma treatment under atmospheric pressure. If the pressure of the atmosphere is higher than 150 torr, the above effect is small, and the effect of reduced pressure is not obtained.

A specific example of the hydrogen plasma treatment under reduced pressure is described below. For example, like a VOD furnace, the ladle 2 containing the molten steel 9 is placed in a vacuum chamber, and the surface of the molten steel in the ladle is exposed to hydrogen plasma from a plasma generator placed in an upper part of the vacuum chamber. Alternatively, like a REDA vacuum degasser, a large-diameter immersion vessel is immersed in molten steel in a ladle, and the air is evacuated from the large-diameter immersion vessel to form a reduced-pressure atmosphere, and the surface of the molten steel sucked up into the large-diameter immersion vessel is exposed to plasma from a plasma generator disposed in an upper part of the large-diameter immersion vessel. These are examples of the treatment under reduced pressure, and the hydrogen plasma treatment is not limited to these methods. The pressure of the atmosphere in plasma exposure is more preferably 100 torr or less, still more preferably 50 torr or less.

In particular, iron oxide and manganese oxide in the slag, among the components of the slag 10 floating on the surface of the molten steel 9 in the ladle, may be oxygen sources supplied to the molten steel 9. For this, the total concentration of iron oxide and manganese oxide in the slag 10 is preferably 5 mass% or less, more preferably 3 mass% or less, still more preferably 1 mass% or less. If the total concentration of iron oxide and manganese oxide is more than 5 mass%, oxygen is supplied to the molten steel 9 from the slag 10 simultaneously with the plasma treatment, and the impurity reduction effect is not sufficient.

An effective method for reducing the amount of iron oxide and manganese oxide in the slag 10 involves adding metal aluminum or aluminum dross to the slag 10 floating on the molten steel before the plasma treatment to reduce iron oxide and manganese oxide with aluminum. Another effective method involves removing the slag 10 from the ladle 2 and then adding a slag-forming agent into the ladle to newly form a slag with less iron oxide and manganese oxide. Another method may involve exposing the slag 10 to hydrogen plasma gas to reduce iron oxide and manganese oxide in the slag.

The timing of addition of deoxidizers, such as aluminum and silicon, after the hydrogen plasma treatment is not limited. For example, after stop of hydrogen plasma, oxygen is supplied to the molten steel 9 from the air, the slag 10, or the ladle refractories to increase the oxygen concentration in the molten steel. For this, deoxidizers, such as aluminum and silicon, are preferably added to the molten steel 9 immediately after the hydrogen plasma treatment to maintain the oxygen concentration in the molten steel, which has been reduced by the hydrogen plasma treatment, at a low level. If it is necessary to control molten steel components other than the deoxidizers, such as aluminum and silicon, certain ferroalloys or pure metals are added to the molten steel 9 in the ladle after the hydrogen plasma treatment.

Since the hydrogen plasma treatment increases the hydrogen concentration in the molten steel to several mass ppm or higher, the dehydrogenation treatment is preferably conducted under reduced pressure of 10 torr or lower for 5 minutes or longer after the hydrogen plasma treatment. For example, when the plasma treatment is conducted in the ladle furnace 1, refining is performed in vacuum degassing equipment, such as an RH vacuum degasser, in the downstream process, and the dehydrogenation treatment is conducted in the vacuum degassing equipment. When the plasma treatment is conducted in a VOD furnace having a degassing function or a REDA vacuum degasser, the dehydrogenation treatment is continued after the plasma treatment.

The refining method using the hydrogen plasma treatment as described above can readily reduce the amount of each of oxygen, nitrogen, and sulfur in the molten steel to 30 mass ppm or less.

EXAMPLES

The hydrogen plasma treatment of molten steel tapped from a converter was tested under an atmospheric pressure by using a ladle furnace (LF) in an actual plant with a scale of 200 tons or more and 350 tons or less of molten steel per charge (Invention Examples 1 to 9, Comparative Examples 1 to 3). In the test for evaluating the effect of an atmosphere under reduced pressure, the hydrogen plasma treatment of the molten steel tapped from a converter was tested under reduced pressure by using a VOD furnace in an actual plant with a scale of 200 tons or more and 350 tons or less of molten steel per charge (Invention Examples 10 to 19, Comparative Examples 4 and 5).

In the ladle furnace, non-transferred plasma torches using DC arc discharge were placed in an upper part of the furnace cover. In a VOD furnace, non-transferred plasma torches using DC arc discharge was placed in an upper part of the vacuum chamber, and the surface of the molten steel in the ladle was exposed to hydrogen plasma from the plasma torches at various plasma gas flow rates and various hydrogen gas concentrations in the plasma gas. In addition, the operation conditions and the molten steel composition (e.g., oxygen concentration, nitrogen concentration, sulfur concentration) in the ladle furnace and the VOD furnace were varied. It is noted that the hydrogen plasma treatment in the ladle furnace was carried out while arc heating with graphite electrodes was stopped.

Before and after the hydrogen plasma treatment, samples for composition analysis were collected from the molten steel in the ladle and analyzed for the oxygen concentration, the nitrogen concentration, and the sulfur concentration in the molten steel to investigate the effect of the plasma treatment. The plasma treatment time was 15 minutes for all samples. It is noted that no deoxidizer, such as aluminum, was added during the time from after tapping from the converter to the plasma treatment. The iron oxide concentration and the manganese oxide concentration in the slag in the ladle were adjusted by adding aluminum dross to the slag in the ladle before start of the treatment in the ladle furnace and the VOD furnace.

Table 1 shows the test conditions of each test. Table 2 shows the evaluation results.

[Table 1]

| | Refining Furnace | Mass of Molten Steel (Wm) | Flow Rate of Plasma Gas ($G_P$) | Hydrogen Concentration in Plasma Gas (($H_2$)) | Pressure of Plasma Exposure Atmosphere ($P_0$) | Number of Gas Bottom Blowing Sections | Total Gas Blowing Flow Rate ($G_B$) | Molten Steel Temperature ($T_L$) | Average Diameter of Molten Steel Bath in Ladle (D) | Depth of Molten Steel Bath in Ladle (H) | Stirring Power ($\varepsilon$) | Circulation Time of Molten Steel in Ladle ($t_C$) | Circulation Flow Rate of Molten Steel in Ladle (Q) | Left Side of Formula (1) | Judgement of Formula (1) | Stirring Power ($\varepsilon$) ≥ 25 W/ton |
|---|---|---|---|---|---|---|---|---|---|---|---|---|---|---|---|---|
| | | ton | Nm³/min | vol% | torr | - | Nm³/min | K | m | m | W/ton | min | ton/min | | | |
| Invention Example 1 | LF | 245 | 10 | 5.0 | 760 | 2 | 0.4 | 1836 | 3.5 | 3.64 | 23.9 | 0.4 | 567.5 | 0.09 | satisfied | unsatisfied |
| Invention Example 2 | LF | 264 | 33 | 3.5 | 760 | 1 | 0.4 | 1817 | 3.5 | 4.41 | 24.3 | 0.4 | 700.5 | 0.16 | satisfied | unsatisfied |
| Invention Example 3 | LF | 341 | 27 | 1.0 | 760 | 2 | 0.3 | 1883 | 4.4 | 3.20 | 12.3 | 0.8 | 425.8 | 0.06 | satisfied | unsatisfied |
| Invention Example 4 | LF | 223 | 26 | 1.0 | 760 | 2 | 0.5 | 1833 | 3.5 | 3.31 | 31.1 | 0.4 | 529.8 | 0.05 | satisfied | satisfied |
| Invention Example 5 | LF | 338 | 23 | 3.0 | 760 | 1 | 1.0 | 1844 | 4.4 | 3.18 | 40.3 | 0.5 | 625.9 | 0.11 | satisfied | satisfied |
| Invention Example 6 | LF | 340 | 34 | 3.5 | 760 | 2 | 1.2 | 1814 | 4.4 | 3.19 | 47.5 | 0.5 | 667.8 | 0.18 | satisfied | satisfied |
| Invention Example 7 | LF | 342 | 15 | 3.5 | 760 | 1 | 0.9 | 1828 | 4.4 | 3.21 | 35.8 | 0.6 | 613.2 | 0.09 | satisfied | satisfied |
| Invention Example 8 | LF | 329 | 24 | 3.0 | 760 | 1 | 1.0 | 1854 | 4.4 | 3.09 | 41.0 | 0.5 | 601.7 | 0.12 | satisfied | satisfied |
| Invention Example 9 | LF | 218 | 6 | 25.0 | 760 | 2 | 1.3 | 1874 | 3.5 | 3.24 | 83.5 | 0.3 | 711.5 | 0.21 | satisfied | satisfied |
| Invention Example 10 | VOD | 316 | 18 | 4.0 | 164 | 1 | 0.6 | 1839 | 4.4 | 2.97 | 51.4 | 0.5 | 606.8 | 0.12 | satisfied | satisfied |
| Invention Example 11 | VOD | 346 | 46 | 2.0 | 137 | 2 | 1.0 | 1805 | 4.4 | 3.25 | 84.7 | 0.4 | 836.0 | 0.11 | satisfied | satisfied |
| Invention Example 12 | VOD | 209 | 15 | 10.0 | 86 | 1 | 0.6 | 1844 | 3.5 | 3.10 | 98.8 | 0.3 | 701.8 | 0.21 | satisfied | satisfied |
| Invention Example 13 | VOD | 334 | 34 | 5.0 | 36 | 2 | 1.4 | 1862 | 4.4 | 3.14 | 186.8 | 0.3 | 1028.6 | 0.17 | satisfied | satisfied |

EP 4 339 302 B1

10

(continued)

| | Refining Furnace | Mass of Molten Steel (Wm) | Flow Rate of Plasma Gas ($G_P$) | Hydrogen Concentration in Plasma Gas ($(H_2)$) | Pressure of Plasma Exposure Atmosphere ($P_0$) | Number of Gas Bottom Blowing Sections | Total Gas Blowing Flow Rate ($G_B$) | Molten Steel Temperature ($T_L$) | Average Diameter of Molten Steel Bath in Ladle (D) | Depth of Molten Steel Bath in Ladle (H) | Stirring Power ($\varepsilon$) | Circulation Time of Molten Steel in Ladle ($t_C$) | Circulation Flow Rate of Molten Steel in Ladle (Q) | Left Side of Formula (1) | Judgement of Formula (1) | Stirring Power ($\varepsilon$) $\geq$ 25 W/ton |
|---|---|---|---|---|---|---|---|---|---|---|---|---|---|---|---|---|
| | | ton | Nm³/min | vol% | torr | - | Nm³/min | K | m | m | W/ton | min | ton/min | | | |
| Invention Example 14 | VOD | 243 | 36 | 10.0 | 121 | 1 | 0.6 | 1807 | 3.5 | 3.61 | 78.3 | 0.3 | 835.2 | 0.22 | satisfied | satisfied |
| Invention Example 15 | VOD | 345 | 52 | 5.0 | 69 | 1 | 0.8 | 1833 | 4.4 | 3.24 | 86.0 | 0.4 | 836.1 | 0.19 | satisfied | satisfied |
| Invention Example 16 | VOD | 219 | 33 | 20.0 | 41 | 2 | 0.8 | 1847 | 3.5 | 3.25 | 157.6 | 0.2 | 888.2 | 0.37 | satisfied | satisfied |
| Invention Example 17 | VOD | 220 | 49 | 40.0 | 52 | 2 | 0.8 | 1853 | 3.5 | 3.27 | 148.0 | 0.3 | 876.1 | 2.24 | satisfied | satisfied |
| Invention Example 18 | VOD | 336 | 42 | 75.0 | 43 | 2 | 1.2 | 1868 | 4.4 | 3.16 | 152.8 | 0.3 | 970.9 | 3.24 | satisfied | satisfied |
| Invention Example 19 | VOD | 239 | 43 | 50.0 | 46 | 2 | 1.0 | 1870 | 3.5 | 3.16 | 197.6 | 0.2 | 914.9 | 0.94 | satisfied | satisfied |
| Comparative Example 1 | LF | 215 | 41 | 0.1 | 760 | 1 | 0.4 | 1817 | 3.5 | 2.86 | 23.5 | 0.5 | 420.7 | 0.01 | unsatisfied | unsatisfied |
| Comparative Example 2 | LF | 322 | 26 | 0.5 | 760 | 2 | 1.4 | 1855 | 4.4 | 3.03 | 58.0 | 0.5 | 652.2 | 0.02 | unsatisfied | satisfied |
| Comparative Example 3 | LF | 316 | 20 | 1 | 760 | 1 | 1.2 | 1830 | 4.4 | 2.97 | 49.4 | 0.5 | 598.8 | 0.03 | unsatisfied | satisfied |
| Comparative Example 4 | VOD | 238 | 19 | 0.7 | 103 | 2 | 1.0 | 1847 | 3.5 | 3.53 | 142.6 | 0.2 | 987.0 | 0.01 | unsatisfied | satisfied |
| Comparative Example 5 | VOD | 229 | 32 | 0.6 | 56 | 2 | 0.8 | 1853 | 3.5 | 3.40 | 140.8 | 0.2 | 921.5 | 0.02 | unsatisfied | satisfied |

[Table 2]

| | Process | T.Fe + MnO Concentration in Slag | Impurity Concentration in Molten Steel Before Plasma Treatment | | | Impurity Concentration in Molten Steel After Plasma Treatment | | | Impurity Removal Rate of Plasma Treatment | | |
|---|---|---|---|---|---|---|---|---|---|---|---|
| | | | oxygen in molten steel | nitrogen in molten steel | sulfur in molten steel | oxygen in molten steel | nitrogen in molten steel | sulfur in molten steel | oxygen in molten steel | nitrogen in molten steel | sulfur in molten steel |
| | | mass% | mass ppm | mass ppm | mass ppm | mass ppm | mass ppm | mass ppm | % | % | % |
| Invention Example 1 | LF | 5.9 | 484 | 40 | 29 | 26 | 25 | 23 | 94.6 | 37.5 | 20.7 |
| Invention Example 2 | LF | 6.2 | 513 | 38 | 31 | 24 | 24 | 22 | 95.3 | 36.8 | 29.0 |
| Invention Example 3 | LF | 5.4 | 436 | 39 | 30 | 29 | 26 | 23 | 93.3 | 33.3 | 23.3 |
| Invention Example 4 | LF | 7.1 | 492 | 38 | 29 | 21 | 23 | 21 | 95.7 | 39.5 | 27.6 |
| Invention Example 5 | LF | 6.8 | 543 | 39 | 31 | 20 | 21 | 20 | 96.3 | 46.2 | 35.5 |
| Invention Example 6 | LF | 5.8 | 589 | 44 | 33 | 19 | 20 | 19 | 96.8 | 54.5 | 42.4 |
| Invention Example 7 | LF | 5.4 | 540 | 38 | 31 | 17 | 18 | 17 | 96.9 | 52.6 | 45.2 |
| Invention Example 8 | LF | 6.6 | 577 | 42 | 36 | 17 | 18 | 17 | 97.1 | 57.1 | 52.8 |
| Invention Example 9 | LF | 5.8 | 603 | 49 | 38 | 16 | 16 | 16 | 97.3 | 67.3 | 57.9 |
| Invention Example 10 | VOD | 5.9 | 582 | 40 | 37 | 16 | 17 | 17 | 97.3 | 57.5 | 54.1 |
| Invention Example 11 | VOD | 6.8 | 488 | 51 | 37 | 9 | 14 | 14 | 98.2 | 72.5 | 62.2 |
| Invention Example 12 | VOD | 5.3 | 548 | 46 | 38 | 6 | 11 | 12 | 98.9 | 76.1 | 68.4 |
| Invention Example 13 | VOD | 7.4 | 496 | 48 | 39 | 8 | 13 | 13 | 98.4 | 72.9 | 66.7 |
| Invention Example 14 | VOD | 2.8 | 523 | 41 | 29 | 3 | 7 | 8 | 99.4 | 82.9 | 72.4 |
| Invention Example 15 | VOD | 3.7 | 482 | 37 | 32 | 4 | 8 | 9 | 99.2 | 78.4 | 71.9 |
| Invention Example 16 | VOD | 1.6 | 461 | 36 | 34 | 1 | 6 | 7 | 99.8 | 83.3 | 79.4 |
| Invention Example 17 | VOD | 0.9 | 552 | 39 | 36 | <1 | 3 | 4 | 99.9 | 92.3 | 88.9 |
| Invention Example 18 | VOD | 0.6 | 463 | 42 | 33 | <1 | 2 | 3 | 99.9 | 85.2 | 90.9 |
| Invention Example 19 | VOD | 0.8 | 531 | 49 | 37 | 1 | 4 | 5 | 99.8 | 91.8 | 86.5 |
| Comparative Example 1 | LF | 8.1 | 479 | 36 | 38 | 69 | 32 | 37 | 85.6 | 11.1 | 2.6 |
| Comparative Example 2 | LF | 5.8 | 523 | 34 | 34 | 72 | 30 | 31 | 86.2 | 11.8 | 8.8 |

(continued)

| | Process | T.Fe + MnO Concentration in Slag | Impurity Concentration in Molten Steel Before Plasma Treatment | | | Impurity Concentration in Molten Steel After Plasma Treatment | | | Impurity Removal Rate of Plasma Treatment | | |
|---|---|---|---|---|---|---|---|---|---|---|---|
| | | | oxygen in molten steel | nitrogen in molten steel | sulfur in molten steel | oxygen in molten steel | nitrogen in molten steel | sulfur in molten steel | oxygen in molten steel | nitrogen in molten steel | sulfur in molten steel |
| | | mass% | mass ppm | mass ppm | mass ppm | mass ppm | mass ppm | mass ppm | % | % | % |
| Comparative Example 3 | LF | 6.0 | 514 | 31 | 28 | 68 | 27 | 25 | 86.8 | 12.9 | 10.7 |
| Comparative Example 4 | VOD | 5.4 | 487 | 46 | 30 | 59 | 39 | 26 | 87.9 | 15.2 | 13.3 |
| Comparative Example 5 | VOD | 2.8 | 501 | 33 | 35 | 53 | 27 | 30 | 89.4 | 18.2 | 14.3 |

In Invention Examples, the hydrogen plasma treatment for 15 minutes reduced the oxygen concentration, the nitrogen concentration, and the sulfur concentration in the molten steel to 30 mass ppm or less simultaneously and rapidly. With regard to the removal rate of each element from start to end of the plasma treatment, the removal rates of oxygen, nitrogen, and sulfur in the molten steel were 94% or higher, 33% or higher, and 20% or higher, respectively.

In Comparative Examples which do not satisfy the conditions of the present invention, reductions in oxygen, nitrogen, and sulfur in the molten steel after the hydrogen plasma treatment were insufficient. With regard to the removal rate of each element from start to end of the plasma treatment, the removal rates of oxygen, nitrogen, and sulfur in the molten steel were as low as 90% or lower, 19% or lower, and 15% or lower, respectively.

Reference Signs List

1    Ladle Furnace
2    Ladle
3    Cover
4    Graphite Electrode
5    Outer Steel Shell
6    Lining Refractory
7    Permanent Refractory
8    Bottom Blowing Plug
9    Molten Steel
10   Slag
11   Plasma Torch
12   Plasma Torch
13   Stirring Gas Bubble

**Claims**

1.  A molten steel refining method comprising:

    a step of performing a gas stirring process for stirring molten steel in a ladle by blowing a stirring gas into the molten steel contained in the ladle,
    wherein in the gas stirring process, a surface of the molten steel, which is in a flow state due to the gas stirring process, in the ladle is subjected to a plasma treatment in which the surface of the molten steel is exposed to a hydrogen gas or an inert gas containing a hydrogen gas in a form of plasma gas from a plasma generator above the molten steel in the ladle under conditions that satisfy formula (1) below, and the plasma treatment reduces an amount of one or two or more elements selected from oxygen, nitrogen, and sulfur contained in the molten steel,
    [Math. 1]

    $$\frac{G_P \times (H_2)}{Q} \geq 0.05 \quad \cdots (1)$$

    wherein $G_P$ is a flow rate ($Nm^3/min$) of the plasma gas, $(H_2)$ is a hydrogen gas concentration (vol%) in the plasma gas, and Q is a molten steel circulation flow rate (ton/min) of the molten steel in the ladle.

2.  The molten steel refining method according to Claim 1, wherein the molten steel circulation flow rate of the molten steel in the ladle is calculated by using formulas (2), (3), and (4) below,

[Math. 2]

$$Q = W_m / t_C \cdots (2)$$

$$t_C = 0.555 \times \left[ (D^2/H)^2/\varepsilon \right]^{0.337} \cdots (3)$$

$$\varepsilon = \frac{6.18 \times G_B \times T_L}{W_m} \times \left[ \ln\left(1 + \frac{H}{1.95 \times 10^{-3} \times P_0}\right) + 0.06\left(1 + \frac{298}{T_L}\right) \right] \cdots (4)$$

wherein Q is the molten steel circulation flow rate (ton/min) of the molten steel in the ladle, $W_m$ is a mass (ton) of the molten steel in the ladle, $t_c$ is a molten steel circulation time (min) of the molten steel in the ladle, D is an average diameter (m) of a molten steel bath in the ladle, H is a depth (m) of the molten steel bath in the ladle, $\varepsilon$ is a stirring power (W/ton), $G_B$ is a total stirring gas blowing flow rate ($Nm^3$/min) into the molten steel in the ladle, $T_L$ is a molten steel temperature (K) of the molten steel in the ladle, and $P_0$ is a pressure (torr) of an atmosphere in a plasma-exposed region.

3. The molten steel refining method according to Claim 1 or 2, wherein the gas stirring process is performed by blowing the stirring gas into the molten steel in the ladle through one or two or more gas blowing sections located at a bottom of the ladle, and a stirring power ($\varepsilon$) calculated from formula (4) in the gas stirring process is 25 W/ton or more.

4. The molten steel refining method according to Claim 3, wherein a region within a plasma-exposed range radius (r), which is calculated from formula (5) below, from a center of the region directly above the surface of the molten steel vertically above at least one of the gas blowing sections is exposed to the plasma gas:
   [Math. 3]

$$r = 0.6 \times H \times (g_B^{0.3} - 0.025)^{0.5} \cdots (5)$$

wherein r is the plasma-exposed range radius (m), and $g_B$ is a stirring gas blowing flow rate ($Nm^3$/min/gas blowing section).

5. The molten steel refining method according to any one of Claims 1 to 4, wherein the pressure of the atmosphere in exposing the molten steel in the ladle to the plasma gas is 150 torr or less (19998 Pa or less).

6. The molten steel refining method according to any one of Claims 1 to 5, wherein a total concentration of iron oxide and manganese oxide in a slag floating on the surface of the molten steel contained in the ladle is 5 mass% or less.

7. The molten steel refining method according to any one of Claims 1 to 6, wherein the plasma treatment reduces amounts of three elements, oxygen, nitrogen, and sulfur, contained in the molten steel simultaneously.

**Patentansprüche**

1. Verfahren zum Raffinieren von geschmolzenem Stahl, umfassend:

   einen Schritt zum Durchführen eines Gasrührverfahrens zum Rühren von geschmolzenem Stahl in einer Pfanne, indem ein Rührgas in den in der Pfanne enthaltenen geschmolzenen Stahl eingeblasen wird,
   wobei im Gasrührverfahren eine Oberfläche des geschmolzenen Stahls, die sich aufgrund des Gasrührverfahrens im Fliesszustand befindet, in der Pfanne einer Plasmabehandlung, bei der die Oberfläche des geschmolzenen Stahls einem Wasserstoffgas oder einem Inertgas, das ein Wasserstoffgas enthält, in Form eines Plasmagases aus einem Plasmagenerator oberhalb des geschmolzenen Stahls in der Pfanne unter Bedingungen, die die nachstehende Formel (1) erfüllen, unterzogen wird, und die Plasmabehandlung eine Menge von einem oder zwei oder mehreren im geschmolzenen Stahl enthaltenen Elementen, ausgewählt aus Sauerstoff, Stickstoff und Schwefel, reduziert,
   [Gleichung 1]

$$\frac{G_P \times (H_2)}{Q} \geq 0{,}05 \cdots (1)$$

wobei $G_P$ die Durchflussrate (Nm$^3$/min) des Plasmagases ist, $(H_2)$ die Wasserstoffgaskonzentration (Vol.-%) im Plasmagas ist und Q die Zirkulationsdurchflussrate (Tonne/min) des geschmolzenen Stahls in der Pfanne ist.

2. Verfahren zum Raffinieren von geschmolzenem Stahl nach Anspruch 1, wobei die Zirkulationsdurchflussrate des geschmolzenen Stahls in der Pfanne unter Verwendung der nachstehenden Formeln (2), (3) und (4) berechnet wird,

[Gleichung 2]

$$Q = W_m/t_C \cdots (2)$$

$$t_C = 0{,}555 \times [(D^2/H)^2/\varepsilon]^{0{,}337} \cdots (3)$$

$$\varepsilon = \frac{6{,}18 \times G_B \times T_L}{W_m} \times \left[ \ln\left(1 + \frac{H}{1{,}95 \times 10^{-3} \times P_0}\right) + 0{,}06\left(1 + \frac{298}{T_L}\right)\right] \cdots (4)$$

wobei Q die Zirkulationsdurchflussrate (Tonne/min) des geschmolzenen Stahls in der Pfanne ist, $W_m$ die Masse (Tonne) des geschmolzenen Stahls in der Pfanne ist, $t_c$ die Zirkulationszeit (min) des geschmolzenen Stahls in der Pfanne ist, D der durchschnittliche Durchmesser (m) eines Stahlschmelzbades in der Pfanne ist, H die Tiefe (m) des Stahlschmelzbades in der Pfanne ist, $\varepsilon$ die Rührleistung (W/Tonne) ist, $G_B$ der Gesamtförderstrom (Nm$^3$/min) des in den geschmolzenen Stahl in der Pfanne eingeblasenen Rührgases ist, $T_L$ die Temperatur (K) des geschmolzenen Stahls in der Pfanne ist und $P_0$ der Druck (Torr) einer Atmosphäre in einem dem Plasma ausgesetzten Bereich ist.

3. Verfahren zum Raffinieren von geschmolzenem Stahl nach Anspruch 1 oder 2, wobei das Gasrührverfahren durch Einblasen des Rührgases in den geschmolzenen Stahl in der Pfanne durch einen oder zwei oder mehrere Gaseinblasabschnitte, die sich am Boden der Pfanne befinden, durchgeführt wird und eine nach Formel (4) berechnete Rührleistung ($\varepsilon$) im Gasrührverfahren 25 W/Tonne oder mehr beträgt.

4. Verfahren zum Raffinieren von geschmolzenem Stahl nach Anspruch 3, wobei ein Bereich innerhalb eines dem Plasma ausgesetzten Reichweitenradius (r), der aus der nachstehenden Formel (5) berechnet wird, von einer Mitte des Bereichs direkt oberhalb der Oberfläche des geschmolzenen Stahls vertikal über mindestens einem der Gaseinblasabschnitte dem Plasmagas ausgesetzt wird:
[Gleichung 3]

$$r = 0{,}6 \times H \times (g_B^{0{,}3} - 0{,}025)^{0{,}5} \cdots (5)$$

wobei r der Radius des dem Plasma ausgesetzten Bereichs (m) und $g_B$ der Förderstrom des eingeblasenen Rührgases (Nm$^3$/min/Gaseinblasabschnitt) ist.

5. Verfahren zum Raffinieren von geschmolzenem Stahl nach einem der Ansprüche 1 bis 4, wobei der Druck der Atmosphäre beim Aussetzen des geschmolzenen Stahls in der Pfanne gegenüber dem Plasmagas 150 Torr oder weniger (19998 Pa oder weniger) beträgt.

6. Verfahren zum Raffinieren von geschmolzenem Stahl nach einem der Ansprüche 1 bis 5, wobei die Gesamtkonzentration von Eisenoxid und Manganoxid in einer auf der Oberfläche des in der Pfanne enthaltenen geschmolzenen Stahls schwimmenden Schlacke 5 Gew.-% oder weniger beträgt.

7. Verfahren zum Raffinieren von geschmolzenem Stahl nach einem der Ansprüche 1 bis 6, wobei die Plasmabehandlung die Mengen der im geschmolzenen Stahl enthalten drei Elemente Sauerstoff, Stickstoff und Schwefel gleichzeitig verringert.

**Revendications**

1. Procédé d'affinage d'acier en fusion comprenant :

   une étape de réalisation d'un processus d'agitation de gaz pour agiter de l'acier en fusion dans une poche en soufflant un gaz d'agitation dans l'acier en fusion contenu dans la poche,
   dans lequel dans le processus d'agitation de gaz, une surface de l'acier en fusion, qui est dans un état d'écoulement en raison du processus d'agitation de gaz, dans la poche est soumise à un traitement au plasma dans lequel la surface de l'acier en fusion est exposée à de l'hydrogène gazeux ou à un gaz inerte contenant de l'hydrogène gazeux sous forme de gaz plasma provenant d'un générateur de plasma au-dessus de l'acier en fusion dans la poche dans des conditions qui satisfont la formule (1) ci-dessous, et le traitement au plasma réduit une quantité d'un ou deux éléments ou plus choisis parmi l'oxygène, l'azote et le soufre contenus dans l'acier en fusion,
   [Maths. 1]

$$\frac{G_P \times (H_2)}{Q} \geq 0,05 \cdots (1)$$

   où $G_P$ est un débit ($Nm^3/min$) du gaz plasma, ($H_2$) est une concentration d'hydrogène gazeux (% en volume) dans le gaz plasma, et Q est un débit de circulation d'acier en fusion (tonne/min) de l'acier en fusion dans la poche.

2. Procédé d'affinage d'acier en fusion selon la revendication 1, dans lequel le débit de circulation d'acier en fusion de l'acier en fusion dans la poche est calculé en utilisant les formules (2), (3) et (4) ci-dessous,

   [Maths. 2]

$$Q = W_m/t_C \cdots (2)$$

$$t_C = 0,555 \times [(D^2/H)^2/\varepsilon]^{0,337} \cdots (3)$$

$$\varepsilon = \frac{6,18 \times G_B \times T_L}{W_m} \times \left[ \text{In}\left(1 + \frac{H}{1,95 \times 10^{-3} \times P_0}\right) + 0,06\left(1 + \frac{298}{T_L}\right)\right] \cdots (4)$$

   où Q est le débit de circulation d'acier en fusion (tonne/min) de l'acier en fusion dans la poche, $W_m$ est une masse (tonne) de l'acier en fusion dans la poche, $t_c$ est un temps de circulation d'acier en fusion (min) de l'acier en fusion dans la poche, D est un diamètre moyen (m) d'un bain d'acier en fusion dans la poche, H est une profondeur (m) du bain d'acier en fusion dans la poche, $\varepsilon$ est une puissance d'agitation (W/tonne), $G_B$ est un débit total de soufflage de gaz d'agitation ($Nm^3/min$) dans l'acier en fusion dans la poche, $T_L$ est une température d'acier en fusion (K) de l'acier en fusion dans la poche, et $P_0$ est une pression (torr) d'une atmosphère dans une région exposée au plasma.

3. Procédé d'affinage d'acier en fusion selon la revendication 1 ou 2, dans lequel le processus d'agitation de gaz est réalisé en soufflant le gaz d'agitation dans l'acier en fusion dans la poche à travers une ou deux sections de soufflage de gaz ou plus situées au fond de la poche, et une puissance d'agitation ($\varepsilon$) calculée à partir de la formule (4) dans le processus d'agitation de gaz est de 25 W/tonne ou plus.

4. Procédé d'affinage d'acier en fusion selon la revendication 3, dans lequel une région au sein d'un rayon (r) de portée exposée au plasma, calculé à partir de la formule (5) ci-dessous, à partir d'un centre de la région directement au-dessus de la surface de l'acier en fusion verticalement au-dessus d'au moins l'une des sections de soufflage de gaz, est exposée au gaz plasma :
   [Maths. 3]

$$r = 0,6 \times H \times (g_B^{0,3} - 0,025)^{0,5} \cdots (5)$$

   où r est le rayon de portée exposée au plasma (m), et $g_B$ est un débit de soufflage de gaz d'agitation ($Nm^3/min$/section de soufflage de gaz).

5. Procédé d'affinage d'acier en fusion selon l'une quelconque des revendications 1 à 4, dans lequel la pression de l'atmosphère lors de l'exposition de l'acier en fusion dans la poche au gaz plasma est de 150 torr ou moins (19998 Pa ou moins).

6. Procédé d'affinage d'acier en fusion selon l'une quelconque des revendications 1 à 5, dans lequel une concentration totale d'oxyde de fer et d'oxyde de manganèse dans un laitier flottant sur la surface de l'acier en fusion contenu dans la poche est de 5 % en masse ou moins.

7. Procédé d'affinage d'acier en fusion selon l'une quelconque des revendications 1 à 6, dans lequel le traitement au plasma réduit simultanément des quantités de trois éléments, l'oxygène, l'azote et le soufre, contenus dans l'acier en fusion.

# FIG. 1

STIRRING GAS →

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4305792 B
- CN 100535153 C

- US 6391081 B1